# EUROPEAN PATENT APPLICATION

(11) **EP 4 734 457 A1**
(43) Date of publication of application: **29.04.2026**
(21) Application number: 25207712.8
(22) Date of filing: 09.10.2025
(51) Int. Cl.: H04L 12/46

(54) **ACCELEROMETER EMULATOR FOR ROAD NOISE CONTROL**

(30) Priority: 23.10.2024 US 202418924843
(71) Applicant: Harman International Industries, Inc., Stamford, Connecticut 06901 (US)
(72) Inventor: CHEN, Zhijun, Stamford, CT 06901 (US)
(74) Representative: Westphal, Mussgnug & Partner, Patentanwälte mbB

(57) **Abstract**

Methods and mechanisms are provided for emulating automotive audio bus (A2B) based accelerometers. A port of an electronic device, which may be implemented using a Field-Programmable Gate Array (FPGA), may be connected downstream from an A2B port of an A2B node of a vehicle. A set of emulated accelerometer data at the electronic device may be selected, and the set of emulated accelerometer data may then be transmitted from the A2B port of the electronic device to the A2B port of the A2B node.

## Description

### FIELD

The disclosure relates to emulation of vehicular accelerometers for vehicles having Automotive Audio Bus (A2B) based road noise control capabilities.

### BACKGROUND

In vehicles travelling on roadways, users and/or passengers in a cabin area of the vehicle may perceive noise due to the vehicle's physical motion over the roadway. Road noise may interfere with other sounds in the vehicle's cabin area, such as conversations between users and/or passengers, audio messages and/or audio content from an on-board infotainment system, and so on.

Noise experienced in a cabin area of a vehicle may be reduced and/or minimized through noise control and/or noise cancellation technologies. Speakers may be arranged in various locations around the cabin area, and may generate (among other things) anti-noise that destructively interferences with the noise, thereby tending to cancel the noise before users and/or passengers may perceive it. Various terms may be used to refer to such technologies, like "active noise control" or "active noise cancellation" (ANC), "road noise control" or "road noise cancellation" (RNC), "active road noise control" or "active road noise cancellation" (ARNC), and/or "road active noise control" or "road active noise cancellation" (RANC). Such technologies are referred to herein as "road noise control" or "road noise cancellation" (RNC) technologies.

In some embodiments, RNC may employ microphones arranged in various locations around the cabin area, which may detect a noise signal (e.g., an audio noise signal). Various electronic systems of the vehicle, such as part of an infotainment system of the vehicle and/or part of an Electronic Control Unit (ECU) of the vehicle, may then process the noise signal and generate a corresponding anti-noise signal which may be played in speakers arranged around the cabin area (e.g., as an audio anti-noise signal). For some embodiments, RNC may employ accelerometers arranged in various locations in the vehicle, in order to measure movement (e.g., acceleration) of the vehicle at that location, in one or more directions, such as in three orthogonal directions.

Meanwhile, the proliferation of distinct audio-system devices within vehicles (e.g., individual loudspeakers and individual microphones) to support advanced audio-based applications (including RNC) led to the development of the Automotive Audio Bus (A2B). Previously, in vehicles having many audio-system devices, those devices may have relatively complex wiring requirements and/or may be parts of relatively complex system architectures.

In contrast, in an A2B system, each distinct audio-system device within a vehicle is a node on a straightforward daisy-chain sequence. So, one simple set of cabling (e.g., a single twisted-pair wire) may run from an A2B bus main node (e.g., an ECU or other electronic device) to the next A2B bus node in the chain (e.g., an A2B bus subordinate node, such as another ECU or electronic device), and another simple set of cabling may run to the following A2B bus node, and so on. In this way, each A2B bus node may be a node on a long chain, and may merely be connected to the previous node in the chain and the subsequent node in the chain.

In operation, in a single A2B "superframe" of time, an initial period of downstream transmission will start at the A2B bus main node and propagate down through the chain of A2B bus subordinate nodes (e.g., toward the last A2B bus subordinate node). Then, a subsequent period of upstream transmission will start at the last A2B bus subordinate node and propagate up through the chain of A2B bus subordinate nodes (e.g., toward the A2B bus main node). In the process, during the period of downstream transmission, each A2B bus subordinate node may first transfer data from an immediately-previous A2B bus node in the chain to an immediately-subsequent A2B bus node in the chain (e.g., down the chain). Similarly, during the period of upstream transmission, each A2B bus subordinate node may then transfer data from the immediately-subsequent A2B bus node in the chain to the immediately-previous A2B bus node in the chain (e.g., up the chain). In this way, the A2B bus main node may send data down the chain toward the last node, with the data passing through each node in the chain; then, starting at the last node, data may be sent back up the chain toward the A2B bus main node, with the data again passing through each node in the chain, back up to the A2B bus main node. Each node may contribute and/or consume data as it passes through the node, and up to 32 devices may be accommodated on the chain. Each second may have between forty thousand and fifty thousand superframes, thereby accommodating audio sampling rates spanning the range of human hearing, e.g., roughly 20 Hertz (Hz) to 20,000 Hz. In this way, a large number of devices on the chain may consume audio data (e.g., in the case of loudspeakers) and/or provide audio data (e.g., in the case of microphones), with a straightforward daisy-chain architecture with simple cabling connecting the nodes.

For vehicles that support advanced audio-based applications over A2B, and which also implement RNC, the accelerometers may also be nodes on the A2B daisy-chain, and may send their data up the chain. Once the data is received at the A2B bus main node device, the acceleration may be analyzed to determine appropriate anti-noise to send back out to the speakers on the A2B bus.

However, the RNC portion of the system design may be hindered for various reasons such as high costs, limited supplies, lengthy design cycles for the accelerometer devices themselves, and so on. Once available, audio-system design may also be hindered by the time and resources involved in driving a specific car with a specific system over various roadways in order to test out the audio system under different road noise conditions. Moreover, some audio system RNC tests for performance purposes may be difficult, infeasible, or even impossible to conduct over a variety of different roadways, and some audio system RNC tests for validation purposes may be difficult, infeasible, or even impossible to conduct over a variety of different abnormal cases.

### SUMMARY

Methods and mechanisms for accelerometer emulation are discussed herein. Electronic devices emulating accelerometers may take the place of accelerometers whose availability may be limited, and three-dimensional acceleration data (e.g., three-axis acceleration data, such as for X, Y, and Z axes) may be provided to an A2B bus by the electronic devices. In some embodiments, the issues described herein may be addressed by an electronic device which has an A2B port that may be connected to an A2B port of an A2B node within a vehicle. A set of emulated accelerometer data may be selected for transmission at the electronic device, and the set of emulated accelerometer data may then be transmitted from the A2B port of the electronic device to the A2B port of the A2B node within the vehicle. In this way, a relatively more available and configurable electronic device may advantageously stand in for one or more relatively less available accelerometers.

For some embodiments, the issues described above may be addressed by accelerometer emulators which have a first A2B port and a second A2B port, of which the first A2B port is compliant with a first revision of an A2B specification, while the second A2B port is compliant with a second revision of the A2B specification that is different than the first revision. An A2B connection to an A2B port of an A2B node of vehicle may be established, through either the first A2B port or the second A2B port, and a set of emulated accelerometer data may be transmitted over the A2B connection. In this way, accelerometer emulators may advantageously be used to provide emulated accelerometer data over A2B busses that are compliant with different revisions of the A2B specification, thereby enhancing the flexibility of the accelerometer emulators.

In still further embodiments, systems for emulating accelerometers may include a first A2B port, which may be compliant with revision 1.0 of the A2B specification, and may also include a second A2B port, which may be compliant with revision 2.0 of the A2B specification. An A2B connection to an A2B port of an A2B node of a vehicle may be established through either the first A2B port or the second A2B port. A configuration under which to transmit data over the A2B connection may then be established, and the set of emulated accelerometer data may be transmitted over the A2B connection in accordance with the configuration. In this way, the systems for emulating accelerometers may advantageously mimic the configurability of stand-alone accelerometers in the course of emulating accelerometer data.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

The disclosure may be better understood from reading the following description of non-limiting embodiments, with reference to the attached drawings, wherein below:
FIGS. 1A-1C show a first architecture incorporating an A2B accelerometer emulator, in accordance with one or more embodiments of the present disclosure;
FIGS. 2A-2C show a second architecture incorporating an A2B accelerometer emulator, in accordance with one or more embodiments of the present disclosure; and
FIGS. 3-5 show methods of emulating A2B accelerometer data, in accordance with one or more embodiments of the present disclosure.

### DETAILED DESCRIPTION

A2B bus based accelerometers may be used in various noise control and/or noise cancellation techniques. During the development phase of a particular noise control and/or noise cancellation design, A2B bus based accelerometers may be used for various cases, whether mounted in a test bench, or in a test vehicle. A2B bus based accelerometers may also be used in development of a noise control and/or noise cancellation design vehicle of a target tuning vehicle, as run on a pre-alignment road course, or an Original Equipment Manufacturer (OEM) course. However, available A2B bus based accelerometers may be provided by different tiers, e.g., at different times and/or by different suppliers, and as a result, available A2B bus based accelerometers may not fully match with noise control and/or noise cancellation systems during the development phase. It may also be difficult to run a system (and accelerometers therein) in test courses to the extent desired, due to limited resources (e.g., time and/or cost).

The A2B accelerometer emulators disclosed herein may advantageously enable recording accelerometer data from a vehicle and/or a test bench and/or using emulated accelerometer data based on the recorded accelerometer data. The A2B accelerometer emulators disclosed herein may also advantageously enable the use of modified accelerometer data and/or new accelerometer data. In various embodiments, the A2B accelerometer emulators may enable testing for a wide variety of test cases.

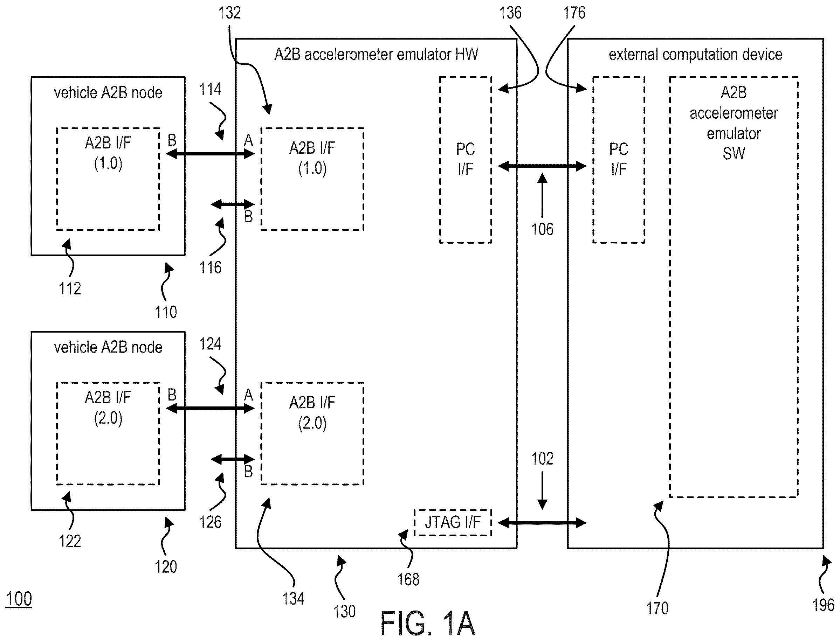

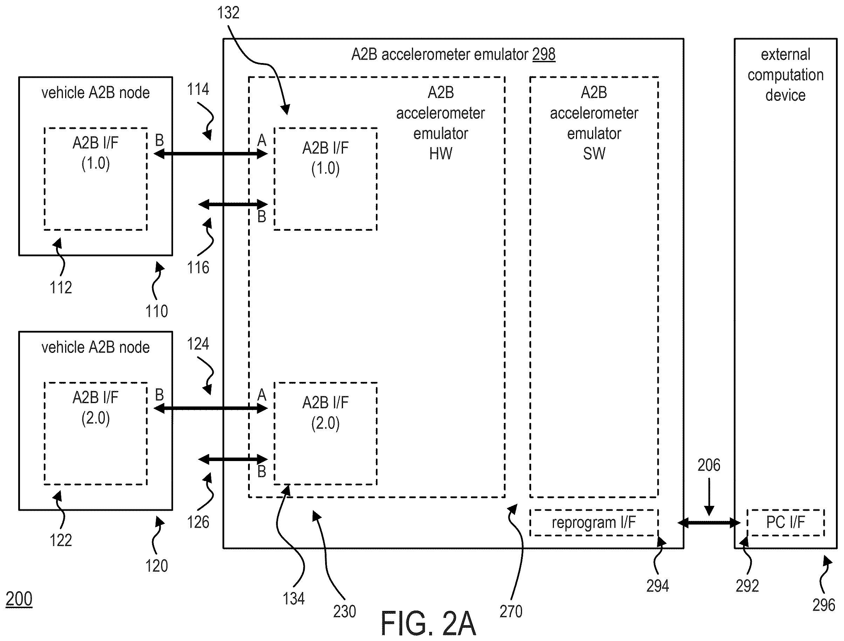

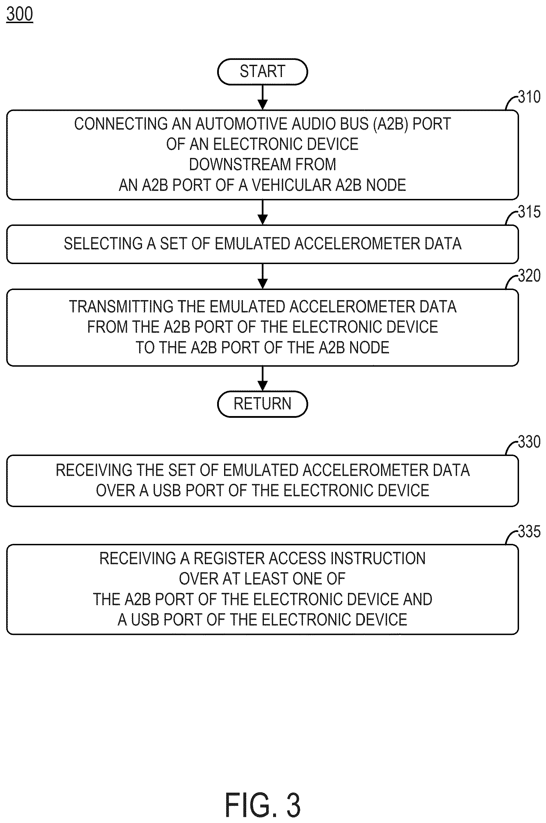

Disclosed herein are mechanisms and methods for emulation of vehicular accelerometers for vehicles having Automotive Audio Bus (A2B) based road noise control capabilities. FIGS. 1A-1C depict a first architecture in which an electronic device implements hardware for an A2B accelerometer, and interacts over an interface, e.g. a Universal Serial Bus (USB) interface, with an external computation device, e.g. a personal computer (PC), that implements software for an A2B accelerometer. FIGS. 2A-2C depict a second architecture in which an electronic device implements both hardware for an A2B accelerometer and software for the A2B accelerometer. FIGS. 3-5 depict various methods of emulating A2B accelerometer data, which may be undertaken in various ways by the electronic devices disclosed herein.

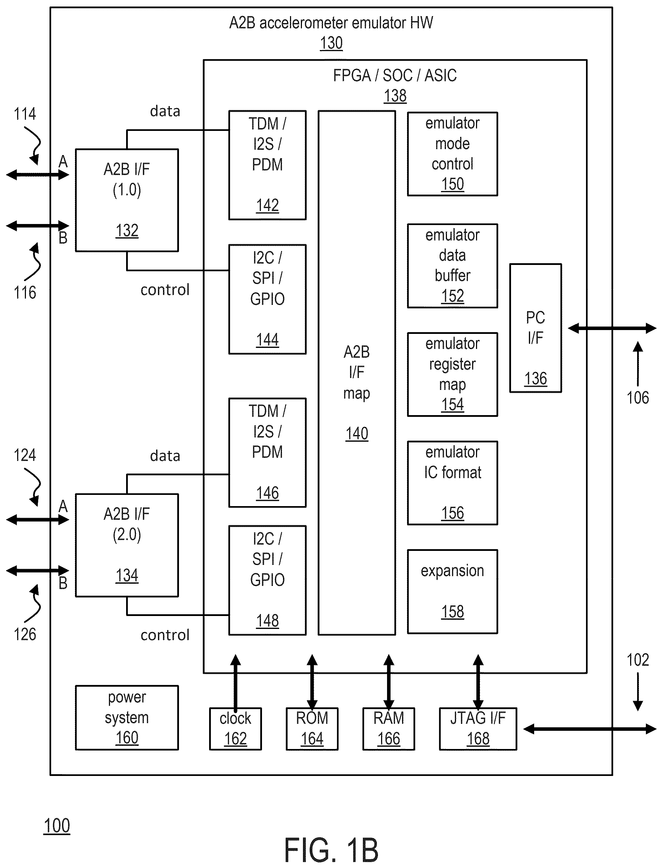

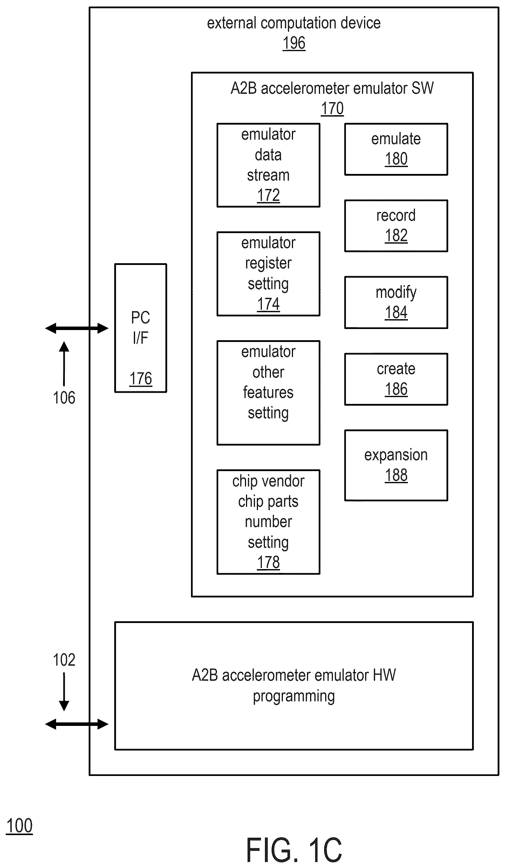

FIG. 1A, FIG. 1B, and FIG. 1C collectively depict a first architecture 100. In FIG. 1A, first architecture 100 is depicted as including an electronic device implementing A2B accelerometer emulator hardware 130 and an external computation device 196 (e.g., a PC) implementing A2B accelerometer emulator software 170. First architecture 100 also includes a first vehicle A2B node 110 and/or a second vehicle A2B node 120.

A2B accelerometer emulator hardware 130 may include a first A2B interface 132 and a second A2B interface 134. (As "A2B interface" as used herein may include, or may be, an A2B transceiver.) In a corresponding manner, first vehicle A2B node 110 may include an A2B interface 112, and second vehicle A2B node 120 may include an A2B interface 122.

In various embodiments that include first vehicle A2B node 110, a first upstream A2B connection 114 may be established between a "B-side" (e.g., a downstream-oriented side) of A2B interface 112 of first vehicle A2B node 110 and an "A-side" (e.g., an upstream-oriented side) of first A2B interface 132. If A2B nodes are present downstream of first A2B interface 132, then a first downstream A2B connection 116 may be established between a B-side of first A2B interface 132 and an A-side of the next downstream A2B node.

Similarly, in various embodiments that include second vehicle A2B node 120, a second upstream A2B connection 124 may be established between a B-side of A2B interface 122 of second vehicle A2B node 120 and an A-side of second A2B interface 134. If A2B nodes are present downstream of second A2B interface 134, then a second downstream A2B connection 126 may be established between a B-side of second A2B interface 134 and an A-side of the next downstream A2B node.

Some A2B-based busses may be based upon revision 1.0 of the A2B specification, while other A2B-based busses may be based upon revision 2.0 of the A2B specification. Accordingly, in various embodiments, first A2B interface 132 of A2B accelerometer emulator hardware 130 may be compliant with at least revision 1.0 of an A2B specification (e.g., "A2B 1.0"), while second A2B interface 134 of A2B accelerometer emulator hardware 130 may be compliant with at least revision 2.0 of the A2B specification (e.g., "A2B 2.0"). A2B interface 112 of first vehicle A2B node 110 may also be compliant with at least revision 1.0 of the A2B specification, and first upstream A2B connection 114 may accordingly be called an "A2B 1.0 connection." Similarly, A2B interface 122 of second vehicle A2B node 120 may also be compliant with at least revision 2.0 of the A2B specification, and second upstream A2B connection 124 may accordingly be called an "A2B 2.0 connection." In this way, A2B accelerometer emulator hardware 130 may advantageously be capable of interfacing with both A2B 1.0 connections and A2B 2.0 connections.

Moreover, although A2B accelerometer emulator hardware 130 is depicted as including both first A2B interface 132 and second A2B interface 134, in some embodiments, A2B accelerometer emulator hardware 130 may merely include first A2B interface 132, which may support an A2B 1.0 connection; while in other embodiments, A2B accelerometer emulator hardware 130 may merely include second A2B interface 134, which may support an A2B 2.0 connection.

External computation device 196 may implement A2B accelerometer emulator software 170. To that end, A2B accelerometer emulator hardware 130 may include an interface 136, and external computation device 196 may include an interface 176. A connection 106 may be established between interface 136 and interface 176, thereby providing a data interface and/or control interface between A2B accelerometer emulator software 170 and A2B accelerometer emulator hardware 130.

In some embodiments, external computation device 196 may include a personal computer (e.g., a desktop computer or laptop computer). For some embodiments, external computation device 196 may include workstation or server computation device. In some embodiments, external computation device 196 include a smart device (e.g., a smart phone or tablet). External computation device 196 may be, and/or may include, any computation device discussed above, or any of a variety of other computation devices (e.g., having processors and memory).

External computation device 196 may provide emulated accelerometer data to through first A2B interface 132 and/or second A2B interface 134, for transmission to first vehicle A2B node 110 and/or second vehicle A2B node 120, respectively. External computation device 196 may also provide configuration instructions (e.g., configuration register access instructions) to A2B accelerometer emulator hardware 130, which may be used to configure, for example, the manner in which A2B accelerometer emulator hardware 130 provides emulated accelerometer data through first A2B interface 132 and/or second A2B interface 134 (for transmission to first vehicle A2B node 110 and/or second vehicle A2B node 120, respectively).

In some embodiments, interface 136 and interface 176 may be, for example, USB interfaces, and connection 106 may accordingly be a USB connection. In other embodiments, interface 136 and interface 176 may be any of a variety of interfaces, such as universal asynchronous receiver / transmitted (UART) interfaces, Ethernet interfaces, Peripheral Component Interconnect (PCI) interfaces, PCI Express interfaces, and so on.

Finally, a connection 102 may also be established between external computation device 196 and a Joint Test Action Group (JTAG) component 168 of A2B accelerometer emulator hardware 130.

Turning to FIG. 1B, A2B accelerometer emulator hardware 130 is depicted as including first A2B interface 132, second A2B interface 134, interface 136, and JTAG component 168 as discussed herein, and is also depicted as including a component 138, which may translate content sent to over connection 106 from a protocol of connection 106 (e.g., a USB protocol) to an A2B protocol suitable for one of the A2B interfaces (as discussed further herein). A2B accelerometer emulator hardware 130 may also include a power system component 160, a clock component 162, a read only memory (ROM) component 164, a random access memory (RAM) component 166, and/or a JTAG component 168, which may supply power, clock signaling, ROM storage, RAM storage, and/or JTAG connectivity (respectively).

Component 138 may include a first data signal block 142 and first control signal block 144 corresponding with first A2B interface 132, and may include a second data signal block 146 and a second control signal block 148 corresponding with second A2B interface 134. In various embodiments, first data signal block 142 and/or second data signal block 146 may each implement signaling having a data signal format, e.g., signaling for a Time-Division Multiplexing (TDM) interface, an Inter-Integrated Circuit Sound (I2S) interface, and/or a Pulse Density Modulation (PDM) interface. For various embodiments, first control signal block 144 and/or second control signal block 148 may each implement signaling having a control signal format, e.g., signaling for an Inter Integrated Circuit (I2C) interface, a Serial Peripheral Interface (SPI) interface, and/or a general purpose input/output (GPIO) interface.

Component 138 may also include a mapping block 140 to map, or translate, between a data signal format and/or a control signal format of connection 106 (which may be made available to component 138 by interface 136) and the data signal format and/or control signal format associated with either first A2B interface 132 or second A2B interface 134. Accordingly, mapping block 140 may translate between (A) the data signal format and/or the control signal format of connection 106, and (B) the data signal format of first data signal block 142 and/or the control signal format of first control signal block 144. Similarly, mapping block 140 may translate between (A) the data signal format and/or the control signal format of connection 106, and (B) the data signal format of second data signal block 146 and/or the control signal format of second control signal block 148.

Component 138 may also include an emulator mode control block 150, an emulator data buffer block 152, an emulator register map block 154, and an emulator IC format block 156, as well as an expansion block 158 for other emulator hardware features. Emulator mode control block 150 may control the emulator mode, e.g., record mode, emulator mode, modify mode, and/or create mode. Record mode may be used for recording A2B bus accelerometer data and/or configuration instructions (e.g., configuration register access instructions) and/or passing A2B bus accelerometer data and/or configuration instructions to A2B accelerometer emulator software 170. Emulator mode may be used to use an A2B accelerometer emulator to emulate an accelerometer, e.g., by letting A2B accelerometer emulator software 170 transfer data and/or register values through A2B accelerometer emulator hardware to an A2B bus. Emulator data buffer block 152 may store accelerometer data and thereby assist the transfer from A2B accelerometer emulator software 170, through A2B accelerometer emulator hardware, to A2B interfaces. Emulator register map block 154 may be one or more registers (e.g., configuration registers) that may be initialized with data, at each address (e.g., configuration address), to permit A2B accelerometer emulator hardware to emulate a register map of an A2B based accelerometer (e.g., configuration registers for A2B devices and/or configuration registers for accelerometers). Emulator IC format block 156 may be used to select an accelerometer device type, e.g., to let A2B accelerometer emulator software 170 select a proper accelerometer device type, to suit a particular project design.

In various embodiments, emulator register map block 154 may include one or more register map settings for, e.g., an accelerometer device to be emulated. In some embodiments, the state of those registers may be accessible to subsequent A2B traffic processed by A2B accelerometer emulator hardware 130. Accordingly, A2B accelerometer emulator hardware 130 may process configuration instructions, and may establish the state of various registers on the basis of the configuration instructions. For some embodiments, the state of those registers may be accessible to emulator register setting module 174 of A2B accelerometer emulator software 170, which may use those registers to adjust the emulated accelerometer data being sent to A2B accelerometer emulator hardware 130.

Accordingly, through mapping block 140, component 138 may translate emulated accelerometer data sent over connection 106 (which may be, e.g., a USB connection) into data signals of first A2B interface 132 (which may be, e.g., TDM, I2S, and/or PDM signaling) as well as control signals of first A2B interface 132 (which may be, e.g., I2C, SPI, and/or GPIO signaling). In turn, first A2B interface 132 may provide the emulated accelerometer data over first upstream A2B connection 114 to first vehicle A2B node 110. Similarly, through mapping block 140, component 138 may translate content sent over connection 106 into data signals of second A2B interface 134 (which may be, e.g., TDM, I2S, and/or PDM signaling) as well as control signals of second A2B interface 134 (which may be, e.g., I2C, SPI, and/or GPIO signaling). In turn, second A2B interface 134 may provide the emulated accelerometer data over second upstream A2B connection 124 to second vehicle A2B node 120.

In some embodiments, one or more blocks of component 138 may be implemented using one or more Field-Programmable Gate Array (FPGA) devices. In such embodiments, the FPGA devices may be programmed (e.g., through connection 106) behave as an accelerometer device on the A2B bus. For some embodiments, one or more blocks of component 138 may be implemented as a System-on-chip (SoC), or as an Application Specific Integrated Circuit (ASIC), or as a set of one or more devices interconnected via a Printed Circuit Board (PCB). In various embodiments, component 138 may be programmed and/or designed to appear to behave as an accelerometer device on the A2B bus.

Turning to FIG. 1C, A2B accelerometer emulator software 170 is depicted as including an emulator data stream module 172, an emulator register setting module 174, and an emulator module for other emulator software features. A2B accelerometer emulator software 170 may also include an identification module 178, which may be associated with various types of information that may identify accelerometer devices. Emulator data stream module 172 may support a window representation of current accelerometer emulation data progress (e.g., of acceleration in up to three dimensions or three axes), and may transfer data to and from emulator data buffer block 152. Emulator register setting module 174 may support a table representation for use in editing various configuration values at various configuration register addresses. Emulator register setting module 174 may also support the loading of configuration register settings from A2B accelerometer emulator software to emulator register map block 154, as well as the reading of configuration register settings from register map block 154 back into A2B accelerometer emulator software. In various embodiments, emulator register setting module 174 may configure register map settings in emulator register map block 154 (which may then be accessible to A2B traffic processed by A2B accelerometer emulator hardware 130). For some embodiments, the emulator module may change a pin (e.g., of component 138) which may be tied to accelerometer function, in order to operate A2B accelerometer emulator hardware 130 in accordance with a test case. The module for emulating other emulator software features may support, for example, a self-test mode and/or one or more features that may be different between accelerometer device vendors, and may work with expansion block 158 of component 138. Identification module 178 may provide support for emulation of devices with different device part numbers, and may support A2B accelerometer emulator software 170 in loading a baseline device setting (e.g., defined by the device's vendor). Identification module 178 may also configure emulator IC format block 156.

A2B accelerometer emulator software 170 may also include an emulate module 180, a record module 182, a modify module 184, a create module 186, and an expansion module 188 for other emulator software features. Emulate module 180 may drive external computation device to supply previously-recorded emulated accelerometer data to A2B accelerometer emulator hardware 130 (e.g., data recorded for later use by record module 182). Record module may drive external computation device to record accelerometer data produced by accelerometers (e.g., for later use by emulate module 180). Modify module 184 may drive external computation device to apply a predetermined modification previously-recorded accelerometer data (e.g., by applying a mathematical function, a statistical model, or an arbitrary modification to previously-recorded accelerometer data) and supply the modified accelerometer data to A2B accelerometer emulator hardware 130. Create module 186 may drive external computation device to generate synthetic accelerometer data (e.g., following a mathematical function or statistical model) and supply the generated accelerometer data to A2B accelerometer emulator hardware 130.

Returning to FIGS. 1A-1C collectively, in various embodiments, A2B accelerometer emulator hardware 130 may cooperate with A2B accelerometer emulator software 170 of external computation device 196 to use component 138 to transfer emulated accelerometer data between external computation device 196 and first vehicle A2B node 110 (e.g., through an A2B 1.0 connection), and/or between external computation device 196 and/or second vehicle A2B node 120 (e.g., through an A2B 2.0 connection). In some embodiments, component 138 may include or may be an FPGA, and may be programmed (e.g., by external computation device 196, through connection 106) to perform this transfer. For the various purposes disclosed herein, component 138 (and/or A2B accelerometer emulator hardware 130) may be accessed and/or programmed by external computation device 196 through connection 102 and JTAG component 168.

In various embodiments, A2B accelerometer emulator hardware 130 may emulate a specific supplier's A2B-based accelerometer device. An accelerometer device's register map, as well as emulated accelerometer data for that accelerometer device, may thus be advantageously supplied to an A2B-based system implementing accelerometer-based RNC without relying upon the availability of the accelerometer devices. A2B accelerometer emulator hardware 130 may take the place of one system accelerometer, some system accelerometers, or all system accelerometers.

In a first work-flow in which previously-recorded accelerometer data is applied, A2B accelerometer emulator hardware 130 may be mounted into a vehicle's A2B network (e.g., A2B bus design), or a test bench's A2B network. The A2B accelerometer emulator may then be operated in emulator mode (e.g., using emulate module 180), settings may be loaded (e.g., using emulator register setting module 174), and accelerometer data to be emulated may be loaded as well. The system (e.g., the vehicle's A2B network, or the test bench's A2B network) may then be run, and stopped, and the emulator closed. The system's behavioral response to the emulated accelerometer data may then be analyzed for subsequent consideration on the part of the design team.

In substantially similar work-flows, the A2B accelerometer emulator may be operated in modify mode (e.g., using modify module 184), or in create mode (e.g., using create module 186).

In a second work-flow, in which accelerometer data is recorded, A2B accelerometer emulator hardware 130 may be mounted into the vehicle's A2B network, or the test bench's A2B network. The A2B accelerometer emulator may then be operated in record mode (e.g., using record module 182), settings may be loaded (e.g., using emulator register setting module 174), and accelerometer data to be emulated may be loaded as well. The system (e.g., the vehicle's A2B network, or the test bench's A2B network) may then be run, and stopped, and the emulator closed. The system's behavioral response to the emulated accelerometer data may then be analyzed for subsequent consideration on the part of the design team.

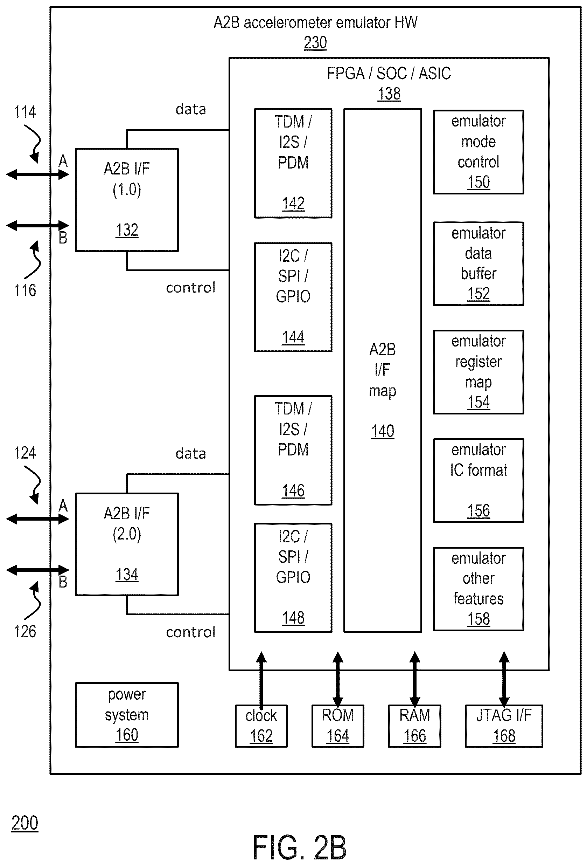

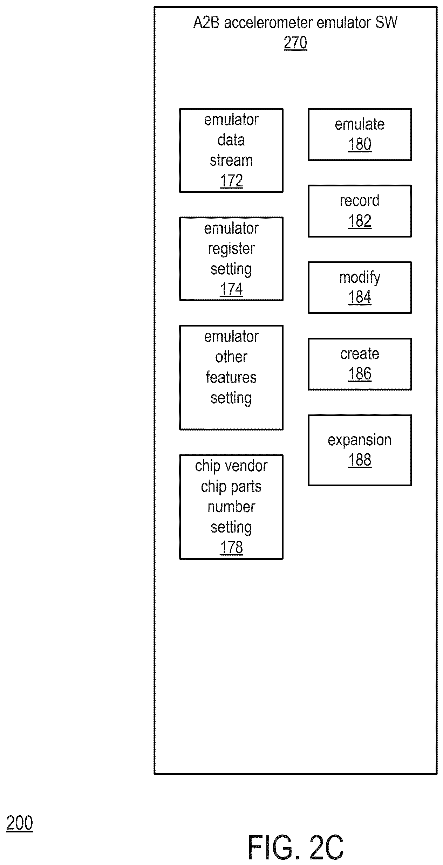

FIG. 2A, FIG. 2B, and FIG. 2C collectively depict a second architecture 200. In FIG. 2A, second architecture 200 is depicted as including an A2B accelerometer emulator 298. In contrast with first architecture 100, A2B accelerometer emulator 298 implements both an A2B accelerometer emulator hardware 230 and an A2B accelerometer emulator software 270. In order to support A2B accelerometer emulator software 270, A2B accelerometer emulator 298 may also include a computation device, which may include any of the variety of computation devices mentioned regarding external computation device 196, or portions thereof. A2B accelerometer emulator 298 may be operated in manners similar to those discussed herein with respect to A2B accelerometer emulator 198 and/or A2B accelerometer emulator software 270 of first architecture 100.

In second architecture 200, A2B accelerometer emulator hardware 230 and A2B accelerometer emulator software 270 may interact with each other as discussed above with respect to A2B accelerometer emulator hardware 130 and A2B accelerometer emulator software 170 of first architecture 100, but over internal interfaces, connections, and/or mechanisms (as opposed to, e.g., an external interface, connection, and/or mechanism as with connection 106, such as a USB connection). Meanwhile, external computation device 296 (which may include any of the variety of computation devices mentioned regarding external computation device 196) may interact with a reprogramming interface module 294 in A2B accelerometer emulator 298 over a connection 206 (which may be substantially similar to connection 106 as discussed herein). In this manner, external computation device 296 may still provide an interface for a user to reprogram features of A2B accelerometer emulator hardware 130, A2B accelerometer emulator software 170, and/or other portions of A2B accelerometer emulator 298.

Accordingly, in A2B accelerometer emulator 298, both hardware-side portions and software-side portions of an A2B accelerometer emulator may be integrated in one, stand-alone module.

FIGS. 3-5 show methods of emulating A2B accelerometer data, in accordance with one or more embodiments of the present disclosure. Turning to FIG. 3, a method 300 may comprise a connecting 310, a selecting 315, and a transmitting 320. In various embodiments, method 300 may also comprise a receiving 330 and/or a receiving 335. In connecting 310, an A2B port of an electronic device may be connected downstream from an A2B port of an A2B node of a vehicle. In selecting 315, a set of emulated accelerometer data may be selected at the electronic device. In transmitting 320, the set of emulated accelerometer data may be transmitted from the A2B port of the electronic device to the A2B port of the A2B node.

In some embodiments, the A2B port of the electronic device and the A2B port of the A2B node of the vehicle may be compliant with revision 1.0 of an A2B specification. For some embodiments, the A2B port of the electronic device and the A2B port of the A2B node of the vehicle may be compliant with revision 2.0 of an A2B specification.

For some embodiments, the A2B port of the electronic device may be a first A2B port, and one of the first A2B port of the electronic device and a second A2B port of the electronic device may be compliant with revision 1.0 of an A2B specification, while the other of the first A2B port of the electronic device and the second A2B port of the electronic device may be compliant with revision 2.0 of the A2B specification.

In some embodiments, the set of emulated accelerometer data may be based on a set of accelerometer data previously recorded for a set of one or more vehicular accelerometers. For example, the set of emulated accelerometer data may be a reproduction of the set of accelerometer data previously recorded for the set of one or more vehicular accelerometers, or may be a modification of the set of accelerometer data previously recorded for the set of one or more vehicular accelerometers. For some embodiments, the set of emulated accelerometer data may be generated based on a model of accelerometer data for a set of one or more vehicular accelerometers (such as a mathematical formula or statistical model as discussed herein).

For some embodiments, an internal interface of the A2B port of the electronic device may include a data bus and/or a control bus. The data bus may include a TDM interface, an I2S interface, and/or and a PDM interface, while the control bus may include an I2C interface, an SPI interface, and/or a GPIO interface.

In some embodiments, in receiving 330, the set of emulated accelerometer data may be received over a USB port of the electronic device. For some embodiments, in receiving 335, a register access instruction may be received over at least one of the A2B port of the electronic device and a USB port of the electronic device. The register access instruction may be operable to configure one or more settings of the electronic device governing interaction with the A2B port of the electronic device.

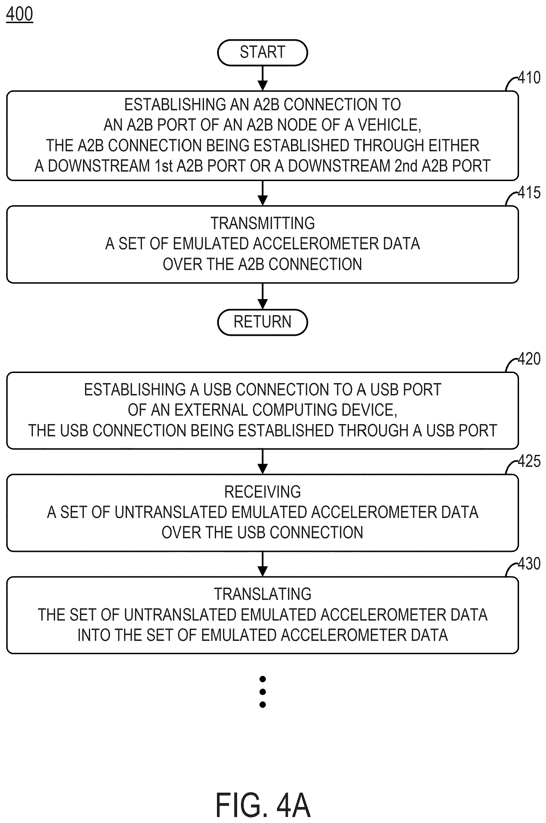

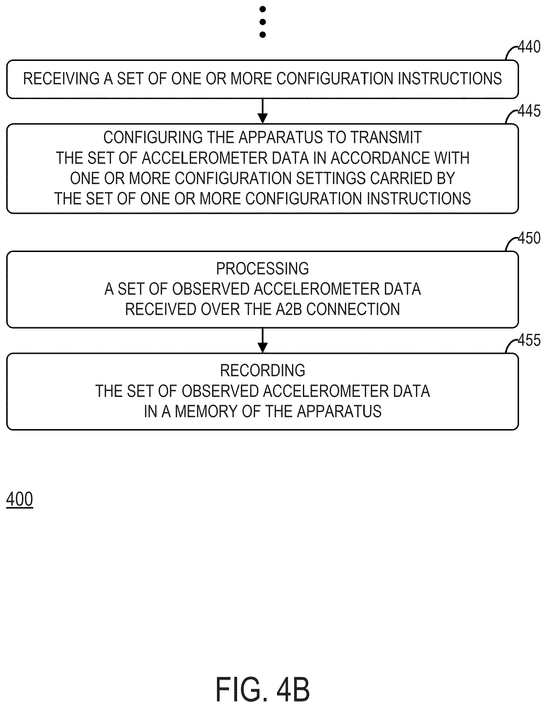

Turning to FIGS. 4A and 4B, a method 400 may comprise an establishing 410 and a transmitting 415. In various embodiments, method 400 may also comprise an establishing 420, a receiving 425, a translating 430, a receiving 440, a configuring 445, a processing 450, and/or a recording 455. In establishing 410, an A2B connection to an A2B port of an A2B node of a vehicle may be established, the A2B connection being established through either a first A2B port of an apparatus compliant with a first revision of an A2B specification, or to a second A2B port of the apparatus compliant with a second revision of the A2B specification. The second revision may be different than the first revision, and the A2B connection may be established downstream from the A2B port of the A2B node of the vehicle. In transmitting 415, a set of emulated accelerometer data may be transmitted over the A2B connection.

In some embodiments, the apparatus may further comprise a USB port. In establishing 420, a USB connection to a USB port of an external computation device may be established, the USB connection being established through the USB port. For some embodiments, in receiving 425, a set of untranslated emulated accelerometer data may be received (e.g., by the apparatus) over the USB connection. In translating 430, the set of untranslated emulated accelerometer data may be translated into the set of emulated accelerometer data.

For some embodiments, in receiving 440, a set of one or more configuration instructions may be received. In configuring 445, the apparatus may be configured to transmit the set of emulated accelerometer data in accordance with one or more configuration settings carried by the set of one or more configuration instructions. The one or more configuration instructions may be received over the USB port.

In some embodiments, in processing 450, a set of observed accelerometer data received over the A2B connection may be processed. In recording 455, the set of observed accelerometer data may be recorded in a memory of the apparatus.

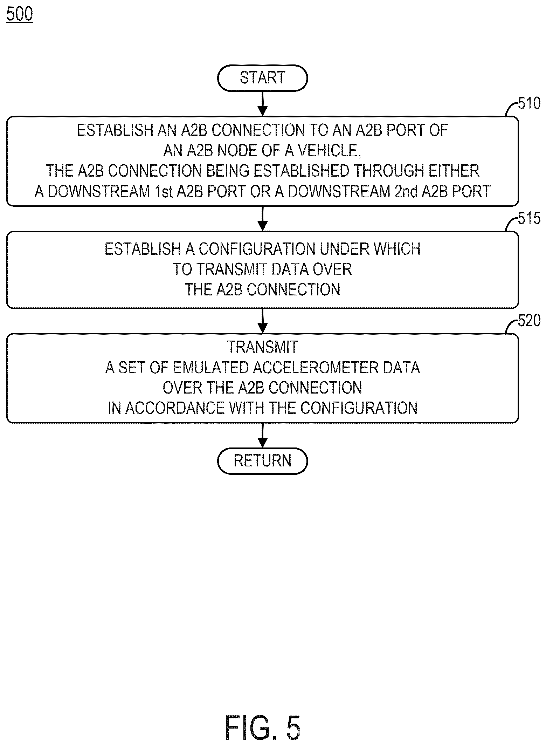

Turning to FIG. 5, a method 500 may comprise an establishing 510, an establishing 515, and a transmitting 520. In establishing 510, an A2B connection to an A2B port of an A2B node of a vehicle may be established. The A2B connection may be established through either a first A2B port compliant with revision 1.0 of an A2B specification or a second A2B port compliant with revision 2.0 of the A2B specification. The A2B connection may be established downstream from the A2B port of the A2B node of the vehicle. In establishing 515, a configuration under which to transmit data over the A2B connection may be established. In transmitting 520, a set of emulated accelerometer data may be transmitted over the A2B connection in accordance with the configuration.

In some embodiments, the A2B port may include a data bus and/or a control bus. The data bus may include a TDM interface. an I2S interface, and/or a PDM interface. The control bus may include an I2C interface, a SPI interface, and/or a GPIO interface. For some embodiments, the set of emulated accelerometer data may be selected a reproduction of a set of previously recorded accelerometer data, a modification of the set of previously recorded accelerometer data, and a set of generated accelerometer data.

The methods may be configured for the operation of the devices, apparatuses, and systems disclosed herein. Thus, the same advantages that apply to the systems may apply to the methods.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices. The methods may be performed by executing stored instructions with one or more logic devices (e.g., processors) in combination with one or more additional hardware elements, such as storage devices, memory, image sensors/lens systems, light sensors, hardware network interfaces/antennas, switches, actuators, clock circuits, and so on. The described methods and associated actions may also be performed in various orders in addition to the order described in this application, in parallel, and/or simultaneously.

Note that the example control and estimation routines included herein can be used with various system configurations. The control methods and routines disclosed herein may be stored as executable instructions in non-transitory memory and may be carried out by the control system including the controller in combination with the various sensors, actuators, and other hardware. The specific routines described herein may represent one or more of any number of processing strategies such as event-driven, interrupt-driven, multitasking, multi-threading, and the like. As such, various actions, operations, and/or functions illustrated may be performed in the sequence illustrated, in parallel, or in some cases omitted. Likewise, the order of processing is not necessarily required to achieve the features and advantages of the example embodiments described herein, but is provided for ease of illustration and description. One or more of the illustrated actions, operations, and/or functions may be repeatedly performed depending on the particular strategy being used. Further, the described actions, operations, and/or functions may graphically represent code to be programmed into non-transitory memory of a computer readable storage medium, where the described actions are carried out by executing the instructions in a system including the various hardware components in combination with the electronic controller.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices, such as the A2B accelerometer emulator components and methods described above with respect to FIGS. 1A-5. The methods may be performed by executing stored instructions with one or more logic devices (e.g., processors) in combination with one or more additional hardware elements, such as storage devices, memory, image sensors/lens systems, light sensors, hardware network interfaces/antennas, switches, actuators, clock circuits, and so on. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and sub-combinations of the various systems and configurations, and other features, functions, and/or properties disclosed.

The disclosure provides support for a method comprising: connecting an A2B port of an electronic device downstream from an A2B port of an A2B node of a vehicle, selecting a set of emulated accelerometer data at the electronic device, and transmitting the set of emulated accelerometer data from the A2B port of the electronic device to the A2B port of the A2B node. In a first example of the method, the A2B port of the electronic device and the A2B port of the A2B node of the vehicle are compliant with revision 1.0 of an A2B specification. In a second example of the method, optionally including the first example, the A2B port of the electronic device and the A2B port of the A2B node of the vehicle are compliant with revision 2.0 of an A2B specification. In a third example of the method, optionally including one or both of the first and second examples, the A2B port of the electronic device is a first A2B port, wherein one of the first A2B port of the electronic device and a second A2B port of the electronic device is compliant with revision 1.0 of an A2B specification, and wherein the other of the first A2B port of the electronic device and the second A2B port of the electronic device is compliant with revision 2.0 of the A2B specification. In a fourth example of the method, optionally including one or more or each of the first through third examples, the set of emulated accelerometer data is based on a set of accelerometer data previously recorded for a set of one or more vehicular accelerometers. In a fifth example of the method, optionally including one or more or each of the first through fourth examples, the set of emulated accelerometer data is a reproduction of the set of accelerometer data previously recorded for the set of one or more vehicular accelerometers. In a sixth example of the method, optionally including one or more or each of the first through fifth examples, the set of emulated accelerometer data is a modification of the set of accelerometer data previously recorded for the set of one or more vehicular accelerometers. In a seventh example of the method, optionally including one or more or each of the first through sixth examples, the set of emulated accelerometer data is generated based on a model of accelerometer data for a set of one or more vehicular accelerometers. In an eighth example of the method, optionally including one or more or each of the first through seventh examples, an internal interface of the A2B port of the electronic device includes a data bus and a control bus, wherein the data bus includes at least one of: a TDM interface, an I2S interface, and a PDM interface, and wherein the control bus includes at least one of: an I2C interface, an SPI interface, and a GPIO interface. In a ninth example of the method, optionally including one or more or each of the first through eighth examples, the method further comprises: receiving the set of emulated accelerometer data over a USB port of the electronic device. In a tenth example of the method, optionally including one or more or each of the first through ninth examples, the method further comprises: receiving a register access instruction over at least one of the A2B port of the electronic device and a USB port of the electronic device. In an eleventh example of the method, optionally including one or more or each of the first through tenth examples, the register access instruction is operable to configure one or more settings of the electronic device governing interaction with the A2B port of the electronic device.

The disclosure also provides support for an apparatus for emulating one or more vehicular accelerometers, the apparatus comprising: a first A2B port compliant with a first revision of an A2B specification, a second A2B port compliant with a second revision of the A2B specification, the second revision being different than the first revision, and an FPGA programmed to: establish an A2B connection to an A2B port of an A2B node of a vehicle, the A2B connection being established through either the first A2B port or the second A2B port, and the A2B connection being established downstream from the A2B port of the A2B node of the vehicle, and transmit a set of emulated accelerometer data over the A2B connection. In a first example of the system, the system further comprises: a USB port, wherein the FPGA is further programmed to: establish a USB connection to a USB port of an external computation device, the USB connection being established through the USB port. In a second example of the system, optionally including the first example, the FPGA is further programmed to: receive a set of untranslated emulated accelerometer data over the USB connection, and translate the set of untranslated emulated accelerometer data into the set of emulated accelerometer data. In a third example of the system, optionally including one or both of the first and second examples, the FPGA is further programmed to: receive a set of one or more configuration instructions, and configure the apparatus to transmit the set of emulated accelerometer data in accordance with one or more configuration settings carried by the set of one or more configuration instructions. In a fourth example of the system, optionally including one or more or each of the first through third examples, the system further comprises: a USB port, wherein the one or more configuration instructions are received over the USB port. In a fifth example of the system, optionally including one or more or each of the first through fourth examples, the FPGA is further programmed to: process a set of observed accelerometer data received over the A2B connection, and record the set of observed accelerometer data in a memory of the apparatus.

The disclosure also provides support for a system for emulating one or more vehicular accelerometers, the system comprising: a first A2B port compliant with revision 1.0 of an A2B specification, a second A2B port compliant with revision 2.0 of the A2B specification, one or more processors, and a non-transitory memory having executable instructions that, when executed, cause the one or more processors to: establish an A2B connection to an A2B port of an A2B node of a vehicle, the A2B connection being established through either the first A2B port or the second A2B port, and the A2B connection being established downstream from the A2B port of the A2B node of the vehicle, establish a configuration under which to transmit data over the A2B connection, and transmit a set of emulated accelerometer data over the A2B connection in accordance with the configuration. In a first example of the system, the A2B port includes a data bus and a control bus, wherein the data bus includes at least one of: a TDM interface, an I2S interface, and a PDM interface, wherein the control bus includes at least one of: an I2C interface, a SPI interface, and a GPIO interface, and wherein the set of emulated accelerometer data is selected from one of: a reproduction of a set of previously recorded accelerometer data, a modification of the set of previously recorded accelerometer data, and a set of generated accelerometer data.

As used herein, the term "approximately" is construed to mean plus or minus five percent of the range unless otherwise specified.

As used herein, the terms "substantially the same as" or "substantially similar to" are construed to mean the same as with a tolerance for variation that a person of ordinary skill in the art would recognize as being reasonable.

As used herein, an element or step recited in the singular and proceeded with the word "a" or "an" should be understood as not excluding plural of said elements or steps, unless such exclusion is stated.

As used herein, references to "one embodiment" or "one example" of the present disclosure are not intended to be interpreted as excluding the existence of additional embodiments that also incorporate the recited features.

As used herein, terms such as "first," "second," "third," and so on are used merely as labels, and are not intended to impose any numerical requirements, any particular positional order, or any sort of implied significance on their objects.

As used herein, terminology in which "an embodiment," "some embodiments," or "various embodiments" are referenced signify that the associated features, structures, or characteristics being described are in at least some embodiments, but are not necessarily in all embodiments. Moreover, the various appearances of such terminology do not necessarily all refer to the same embodiments.

As used herein, terminology in which elements are presented in a list using "and/or" language means any combination of the listed elements. For example, "A, B, and/or C" may mean any of the following: A alone; B alone; C alone; A and B; A and C; B and C; or A, B, and C.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A method comprising:
connecting an automotive audio bus (A2B) port of an electronic device downstream from an A2B port of an A2B node of a vehicle;
selecting a set of emulated accelerometer data at the electronic device; and
transmitting the set of emulated accelerometer data from the A2B port of the electronic device to the A2B port of the A2B node.

2. The method of claim 1,
wherein the A2B port of the electronic device and the A2B port of the A2B node of the vehicle are compliant with revision 1.0 of an A2B specification.

3. The method of claim 1,
wherein the A2B port of the electronic device and the A2B port of the A2B node of the vehicle are compliant with revision 2.0 of an A2B specification.

4. The method of claim 1,
wherein the A2B port of the electronic device is a first A2B port;
wherein one of the first A2B port of the electronic device and a second A2B port of the electronic device is compliant with revision 1.0 of an A2B specification; and
wherein the other of the first A2B port of the electronic device and the second A2B port of the electronic device is compliant with revision 2.0 of the A2B specification.

5. The method of claim 1,
wherein the set of emulated accelerometer data is based on a set of accelerometer data previously recorded for a set of one or more vehicular accelerometers.

6. The method of claim 5,
wherein the set of emulated accelerometer data is a reproduction of the set of accelerometer data previously recorded for the set of one or more vehicular accelerometers.

7. The method of claim 5,
wherein the set of emulated accelerometer data is a modification of the set of accelerometer data previously recorded for the set of one or more vehicular accelerometers.

8. The method of claim 1,
wherein the set of emulated accelerometer data is generated based on a model of accelerometer data for a set of one or more vehicular accelerometers.

9. The method of claim 1,
wherein an internal interface of the A2B port of the electronic device includes a data bus and a control bus;
wherein the data bus includes at least one of: a Time Division Multiplexing (TDM) interface; an Inter-Integrated Circuit Sound (12S) interface; and a Pulse Density Modulation (PDM) interface; and
wherein the control bus includes at least one of: an Inter-Integrated Circuit (I2C) interface; a Serial Peripheral Interface (SPI) interface; and a general purpose input/output (GPIO) interface.

10. The method of claim 1, further comprising:
receiving the set of emulated accelerometer data over a Universal Serial Bus (USB) port of the electronic device and/or receiving a register access instruction over at least one of the A2B port of the electronic device and a Universal Serial Bus (USB) port of the electronic device.

11. The method of claim 10,
wherein the register access instruction is operable to configure one or more settings of the electronic device governing interaction with the A2B port of the electronic device.

12. An apparatus for emulating one or more vehicular accelerometers, the apparatus comprising:
a first automotive audio bus (A2B) port compliant with a first revision of an A2B specification;
a second A2B port compliant with a second revision of the A2B specification, the second revision being different than the first revision; and
a Field-Programmable Gate Array (FPGA) programmed to:
establish an A2B connection to an A2B port of an A2B node of a vehicle, the A2B connection being established through either the first A2B port or the second A2B port, and the A2B connection being established downstream from the A2B port of the A2B node of the vehicle; and
transmit a set of emulated accelerometer data over the A2B connection.

13. The apparatus for emulating one or more vehicular accelerometers of claim 12, further comprising a Universal Serial Bus (USB) port, wherein the FPGA is further programmed to:
establish a USB connection to a USB port of an external computation device, the USB connection being established through the USB port.

14. The apparatus for emulating one or more vehicular accelerometers of claim 13, wherein the FPGA is further programmed to:
receive a set of untranslated emulated accelerometer data over the USB connection; and
translate the set of untranslated emulated accelerometer data into the set of emulated accelerometer data.

15. The apparatus for emulating one or more vehicular accelerometers of claim 12, wherein the FPGA is further programmed to:
receive a set of one or more configuration instructions; and
configure the apparatus to transmit the set of emulated accelerometer data in accordance with one or more configuration settings carried by the set of one or more configuration instructions.
